# EUROPEAN PATENT SPECIFICATION

(11) **EP 4 438 413 B1**
(45) Date of publication and mention of the grant of the patent: **17.12.2025**
(21) Application number: 24164053.1
(22) Date of filing: 18.03.2024
(51) Int. Cl.: B60R 9/04, B60R 9/052

(54) **LOAD CARRYING BAR WITH SEAL**
LASTENTRAGESTANGE MIT DICHTUNG
BARRE DE SUPPORT DE CHARGE AVEC JOINT D'ÉTANCHÉITÉ

(30) Priority: 31.03.2023 SE 2350381
(43) Date of publication of application: 02.10.2024
(73) Proprietor: Work System Sweden AB, 561 61 Tenhult (SE)
(72) Inventor: Ulvegard, Hannes, 561 40 Huskvarna (SE); Hallenborg, Jonas, 561 34 Huskvarna (SE)
(74) Representative: Bergenstråhle & Partners AB

(56) References cited:
- EP-A1- 3 192 702
- EP-A1- 3 470 271
- EP-B1- 2 200 867
- WO-A1-2014/022435
- AU-A4- 2006 100 386

## Description

### Technical field

The present invention relates generally to a load carrying bar for a roof rack, which load carrying bar has a longitudinal channel, arranged for receiving different kinds of accessories and for mounting the same to the load carrying bar. The channel comprises a seal which is arranged to seal an opening of the channel, to minimize air turbulence and to protect the channel from dirt and moisture.

### Background art

Load carrying bars for roof racks are manufactured in many different configurations, where older and simpler types of load carrying bars often are made of a longitudinal bar with a square section. To fit an accessory to this kind of load carrying bar, some kind of clamping attachment are clamped around the outside of the bar in an optional position along the length. Nowadays, a more common solution of load carrying bar comprises a longitudinal channel along the length of the load carrying bar, which channel has an opening arranged for receiving attachment devices of different kinds of accessories, which are to be fitted to the bar. Since the opening of the channel is exposed to wind, when the vehicle is travelling, wind turbulence is created and this causes disturbing wind noise. To overcome this problem, as well as protect the channel from dirt and moisture, the channel is protected by some kind of infill or cover, to seal the channel and avoid wind turbulence caused by the exposed opening, and to protect the channel from dirt and moisture.

Some accessories developed for this type of load carrying bar (with a channel), must be threaded from the end of the channel of the load carrying bar, and the cover for the channel often has to be removed, cut into smaller pieces and then arranged in the channel on both sides of the accessory, which is inconvenient and not very flexible. Such a solution is described in US 6,176,404 B1. To avoid this, accessories are developed to be inserted directly into the opening of the channel, that is, not necessarily from the bar end/channel end. Therefore, other types of seals are developed, which allows insertion of an accessory directly into the opening of the channel, i.e. in a direction transverse the extension of the channel. Of course, some of these types also allows insertion of the accessory from the end of the channel/load carrying bar. A number of such solutions are presented in for example EP 3 192 702 B1, where different seal solutions, with more or less complicated sealing portion/portions, seals the opening and where in some of the solutions, the sealing portions are biased towards the channel opening by spaced apart biasing flanges. The seals are made of rather stiff rubber material, to be able to bias the sealing portion towards the opening in a proper manner. Document EP3470271A shows a load carrying bar according to the preamble of claim 1.

A problem with known solutions is that the design of the seal and the material of the seal gives an unnecessary long compression/impact of the seal, from the mounted accessory and along the channel, why disturbing turbulence still may occur around the mounted accessory.

Thus, there is a need of a solution which takes care of at least this problem.

### Summary of invention

An object of the present invention is to provide a load carrying bar for a roof rack according to claim 1, which solves the above-described problems.

According to an aspect, a load carrying bar for a roof rack is disclosed. The load carrying bar has an extension in a longitudinal direction which is a length direction of the load carrying bar. It further has a height in a height direction, which is transverse the longitudinal direction, and a width in a width direction, which is transverse both the longitudinal and the height direction. The load carrying bar comprises a channel with an extension in the longitudinal direction and the channel comprises a bottom part and two opposite sidewalls, which gives a more or less U-formed channel. The bottom part may be a floor part of the channel but optionally may be at least one, from the sidewall/sidewalls protruding, "shelf part" or the like. The bottom part thereby is arranged as an anvil which is arranged to provide a "counterforce", to spring a seal arranged into the channel towards the opening (see description below). The load carrying bar further comprises a first flange which protrudes from the first sidewall, distal from the bottom part and in direction towards the second sidewall, and further a second flange which protrudes from the second sidewall, distal from the bottom part and in direction towards the first sidewall. The first and second flanges has an extension along the channel and thus protrudes from the sidewalls of the channel along the bar, wherein an opening is arranged between the first and second flanges. Thus, the channel has a first width, between the first and second sidewalls in the width direction, and the opening has a second width, between the first and second flanges in the width direction, which second width of the opening is smaller than the first width of the channel. By that, the channel is arranged to receive a fastening member of an accessory for the load carrying bar, which may be inserted into the channel and locked in a position along the bar, by some kind of engagement means, which engages with the channel and/or first and second flanges.

The load carrying bar further comprises a seal, which is arranged into the channel and has an extension in the longitudinal direction, preferably along the hole length of the channel. The seal comprises a sealing part, which is arranged to seal the opening of the channel, and one spring part, which is arranged to spring the sealing part towards the opening. The spring part is arranged in contact at least with the bottom part of the channel (which bottom part as mentioned may be a floor part, a shelf part or the like). The spring part is attached to the sealing part by at least one stem part, which extends between the sealing part and the spring part in the height direction, such that at least two cavities are arranged between the sealing part and the spring part, on opposite sides of the stem part. This means that there is a free space on respective sides of the stem part, wherein the sealing part and the spring part are arranged at a distance from each other, which distance is set by the length of the stem part.

Such a solution facilitates a load carrying bar with very low air turbulence and where the channel is very well protected from dirt and moisture. Due to the inventive design of the seal, any accessory which is mounted to the load carrying bar by engagement means into the channel, will only impact the seal in a local position, just around the accessory. The seal is only "deformed" or pressed down just in close vicinity of the accessory's engagement means, which is far better than known load carrying bars and seals. By that, the seal does not need to be cut into pieces as the case for many known load carrying bars, to get less impact or compression of the seal around the accessory's engagement means, and any accessory may be positioned anywhere along the channel of the load carrying bar, independently of the seal. This also entails that accessories may be relocated without damaging the seal. Further, the solution is very cost efficient due to the design, since the seal may be made of cost-efficient material and with less material compared to seals known on the market. The design further enables to fit electric cables and other equipment into the channel, below the seal or in the cavities of the seal. The seal further fits many designs of the channel, which provides even more flexibility regarding positioning of electrical cables and electrical (and other) equipment in the channel.

According to an embodiment, the seal is elastic, preferably more "foam-like" compared to stiff rubber, which is a conventional material used in prior art load carrying bars. By elastic, is meant that the seal may be compressed at least at the spring part, and/or at the sealing part or both. Even the stem part may be elastic. By that, the softness of the seal enables a very local compression of the seal, just around the position where the accessory engages with the channel.

According to an embodiment, the seal has a density within the preferred range 400 - 900 kg/m³. This is far more soft than conventional seals used to seal channels of load carrying bars known in the market. Thus, a very good seal is achieved with high protection against air turbulence, which otherwise occurs if the channel is open (not properly sealed), and the channel is very well protected from dirt and moisture.

According to the invention, the stem part is attached to central parts of the sealing part and spring part, seen in the width direction. This means that the seal looks like a "tree" with a stem and a "root section" (the spring part), where the stem part is arranged in the middle or close to the middle point of the sealing part and spring part, and extends like a stem between them. Preferably, the stem part is arranged in the middle and one side of the seal is a mirror-copy of the opposite side of the seal (the opposite sides of the stem), whereby the seal may be arranged into the channel independently of the direction of the seal (no need of two product articles, right and left). By that the stem part is arranged close to or in the middle, the spring part may flex in a very effective way and the spring part flex very locally, seen in the elongate as well as in the width direction of the load carrying bar.

According to an embodiment, the spring part of the seal is arranged in contact with first and second corners of the channel. The channel is designed such that the first corner is arranged between the first sidewall and the bottom part of the channel, and the second corner is arranged between the second sidewall and the bottom part of the channel. As mentioned before, the bottom part may be a "floor" and/or a "shelf" of the channel, where the latter provides the possibility of having an even deeper channel, where a first bottom part is the shelf part and a second bottom part is a bottom in terms of a "floor", wherein the "floor" may be lower/deeper arranged compared to the "shelf", which is positive for arranging bulky equipment into the channel (below the seal). By having the spring part in contact with the corners, the spring part gets good support both from the bottom part and the sidewalls, which means a good and "secured" spring force towards the opening of the channel.

According to an embodiment, the sealing part of the seal comprises a first engagement part, arranged to engage with the first flange, and a second engagement part arranged to engage with the second flange, wherein the first and second engagement parts are arranged to prevent the seal from leaving the channel (in direction from the bottom part towards the opening) when the spring part springs the sealing part towards the opening.

According to an embodiment, the spring part comprises a first shank and an opposite second shank, which each is attached to the stem part, wherein the first shank is arranged to engage at least with the bottom part of the channel with a first free end, and the second shank is arranged to engage at least with the bottom part of the channel with a second free end. The first and second shanks are preferably longitudinal with an extension along the seal in the longitudinal direction but may of course comprise shorter parts as a plurality of first and second shanks along the length of the seal. Each shank may have many different designs like C-shaped, S-shaped, zigzag etc. and preferably they are mirror-copies of each other, relative the stem part. It is of importance, that each shank have contact with the bottom part (floor or shelf) to be able to bias in direction from the bottom part towards the opening of the channel.

According to an embodiment, the first free end of the first shank is arranged to engage with the first corner of the channel and the second free end of the second shank is arranged to engage with the second corner of the channel.

According to an embodiment, the spring part has a cross-section which is C-shaped. The spring part may also have a cross-section which is U-shaped. There is no direct stringent border between a C-shape and a U-shape, so both shapes applies to the concept. The design of the spring part as C-shaped/U-shaped gives a spring-force and possibility to flex/spring/bias and to have a "collapsing" behavior. Further, it provides a free space between the spring part and the bottom part of the channel, for equipment, cables etc. for accessories like electrical lights etc. The spring part may further look like an open square or rectangle, in other words, a U-shape with corners.

According to an alternative embodiment compared to the above, the spring part has a cross-section which is V-shaped, where the peak of the "V" is attached to the stem part, which also enables similar functionality as the C-shape and U-shape.

According to an embodiment, the seal further comprises a second and third stem parts extending between the sealing part and the spring part in the height direction, on opposite sides of the first stem part. By this design, one of the at least two cavities is arranged between the first stem part and the second stem part and the other of the at least two cavities is arranged between the first stem part and the third stem part.

### Brief description of drawings

The invention is now described, by way of example, with reference to the accompanying drawings, in which:
Fig. 1 shows an isometric view of o a load carrying bar according to the invention.
Fig. 2 shows a cross-section view of a seal of the load carrying bar of Fig.1.
Fig. 3 shows a cross-section view of the load carrying bar of Fig. 1.

### Description of embodiments

In the following, a detailed description of a load carrying bar 1 according to the invention, is disclosed in detail in respect of embodiments and in reference to the accompanying drawings. All examples herein should be seen as part of general description and therefore possible to combine in any way in general terms.

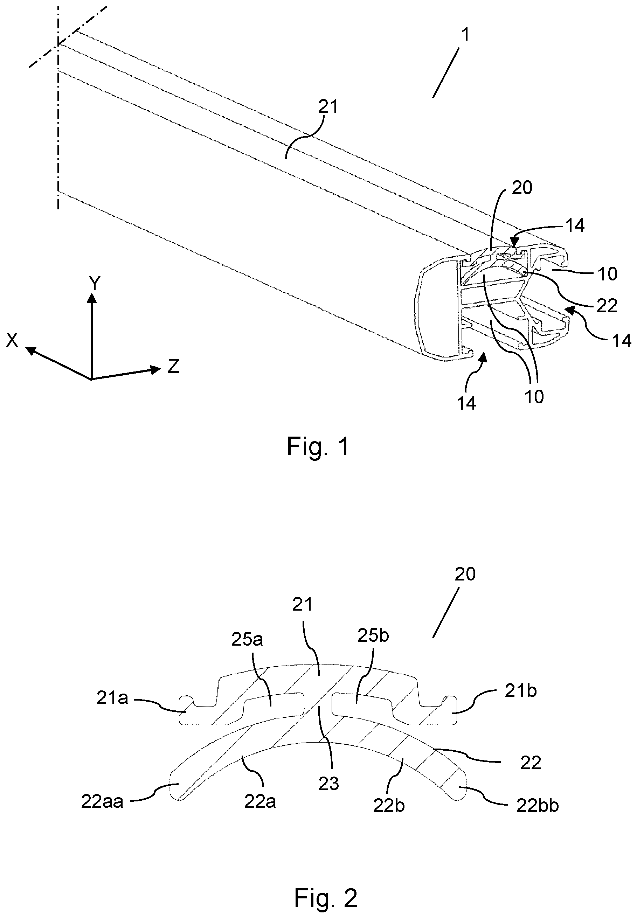

Fig. 1 shows an isometric view of the inventive load carrying bar 1 for a roof rack (not shown), which has an extension in a longitudinal direction X. The load carrying bar 1 further has a height in a height direction Y, which direction is a transverse direction relative the longitudinal direction X, and further a width in a width direction Z, which direction is a transverse direction relative the longitudinal and height directions X, Y. The load carrying bar 1 comprises at least one channel 10, but the preferred embodiment of Fig.1 has three channels 10, which each is arranged to receive an accessory, or an engagement means for an accessory, which may be inserted through an opening 14 of the channel 10. The accessory may be for example a holder, a stop, a lamp, a box etc. The channel 10 also has an extension in the longitudinal direction X, preferably along the whole length of the load carrying bar 1. The load carrying bar 1 preferably is an aluminium profile made of extruded aluminium. In Fig.1, each one of the three channels 10 has an opening 14, wherein one channel 10 has the opening 14 directed upwards relating to if the load carrying bar 1 has an orientation as in the figure, the opposite channel 10 has the opening 14 directed downwards and the third channel 10 has the opening 14 directed to the side. The load carrying bar 1 further comprises at least one seal 20 (preferably one seal per channel) which comprises a sealing part 21, arranged to cover/seal the opening 14, and a spring part 22, arranged to spring/bias the sealing part 21 towards the opening 14.

Fig. 2 shows a cross-section view of the seal 20 which is also visible in Fig.1, where the seal 20 is arranged into the channel 10 which is directed with its opening 14 upwards. The seal 20 has an extension in the longitudinal direction X, and preferably has a length which is similar or close to similar with the length of the channel 10, in the longitudinal direction X. As mentioned, the seal 20 comprises the sealing part 21, which is arranged to cover/seal the opening 14, and one spring part 22, which is arranged to spring the sealing part 21 towards the opening 14. The seal 20 further comprises one stem part 23, which connects the spring part 22 to the sealing part 21, preferably in the middle of the seal, seen in the width direction Z. The stem part 23 has an extension in the height direction Y, which means that two cavities 25a, 25b are formed/arranged between the sealing part 21 and the spring part 22 on opposite sides of the stem part 23, such that the sealing part 21 and spring part 22 are arranged with a distance between them, as seen in Fig. 2. The seal 20 is made of elastic material, which preferably is a "foam-like", soft material which differs from known seals for load carrying bars, which are made of rather stiff rubber. The material of the seal 20 preferably has a density within the range 400 - 900 kg/m³, which makes the seal 20 rather soft, wherein an accessory inserted into the channel 10, only gives a local compression of the seal 20, just around the accessory, very local around the same. More preferred, the density is between 550 - 750 kg/m³ and even more preferred, around 650 kg/m³ which is proven optional features of the seal 20 together with the overall design of the seal 20.

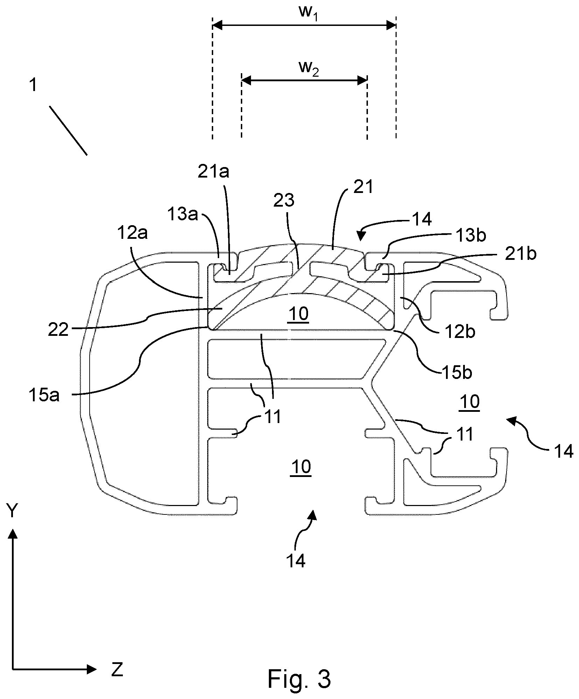

The sealing part 21 of the seal 20 comprises a first engagement part 21a arranged to engage with a first flange 13a of the load carrying bar 1 and a second engagement part 21b arranged to engage with a second flange 13b of the load carrying bar 1 (see description in connection to Fig. 3). The first and second engagement parts 21a, 21b are arranged to prevent the seal 20 from leaving the channel 10 when the spring part 22 springs the sealing part 21 towards the opening 14. The spring part 22 is C-shaped (or U-shaped) and comprises a first shank 22a and an opposite second shank 22b which each is attached to the stem part 23, wherein the first shank 22a comprises a first free end 22aa and the second shank 22b comprises a second free end 22bb. Another way to describe it is that the C-shaped spring part 22 is connected in the middle to the stem part 23, where the first and second shanks 22a, 22b extends away from the stem part 23 on opposite sides of the same.

Fig. 3 shows a cross-section view of the load carrying bar 1 of Fig. 1. The channel 10 comprises a bottom part 11 and two opposite sidewalls 12a, 12b, and the first and second flanges 13a, 13b. The first flange 13a protrudes from the first sidewall 12a, at a distance from the bottom part 11, i.e. near an outer side of the load carrying bar 1, and the first flange 13a protrudes in direction towards the second sidewall 12b. In the same way, the second flange 13b protrudes from the second sidewall 12b, distal from the bottom part 11, in direction towards the first sidewall 12a. The opening 14 is defined between the first and second flanges 13a, 13b. The channel 10 has a first width w₁ , between the first and second sidewalls 12a, 12b (in the width direction Z) and the opening 14 has a second width w₂, between the first and second flanges 13a, 13b (in the width direction Z). The second width w₂ of the opening 11 is smaller than the first width w₁ of the channel 10, wherein accessories may be fitted into the channel 10 and further be locked there in optionable ways, normally by engagement between the engagement means of the accessory and channel parts as the sidewalls 12a, 12b, the flanges 13a, 13b and maybe the bottom part 11.

The spring part 22 of the seal 20 is as mentioned arranged in contact with at least the bottom part 11, but more preferred, in contact with first and second corners 15a, 15b of the channel 10. The first corner 15a is arranged between the first sidewall 12a and the bottom part 11 of the channel 10 and the second corner 15b is arranged between the second sidewall 12b and the bottom part 11 of the channel 10. Thus, the first free end 22aa of the first shank 22a is arranged to engage with the first corner 15a of the channel 10 and the second free end 22bb of the second shank 22b is arranged to engage with the second corner 15b of the channel 10, which may be seen in Fig.3. Since there is a problem with disturbing noise when wind passing the channel 10, when a vehicle arranged with the load carrying bar 1 is traveling ahead, the channel 10 must be covered as much as possible. The design of the seal 20 solves this in a very good way, wherein the sealing part 21 covers the opening 14 in a very smooth way, and the first engagement part 21a engages with the first flange 13a of the load carrying bar 1 and the second engagement part 21b engages with the second flange 13b of the load carrying bar 1, as mentioned above, wherein a good sealing function is achieved around the flanges 13a, 13b and of the opening 14. The first and second engagement parts 21a, 21b further prevent the seal 20 from leaving the channel 10 when the spring part 22 springs the sealing part 21 towards the opening 14. Due to the C-shape of the spring part 22, there is formed a cavity between the sealing part 22 and the bottom part 11 of the channel 10. Depending on the design of the bottom part 11, the cavity may have different sizes which may be seen when comparing the upper channel 10 with the side channel 10 in Fig. 3. The side channel 10 is designed such that the bottom part 11 comprises two shelf parts 11 arranged on opposite sides of a floor part 11, which shelf parts and floor part are parts of the bottom part 11. With a design like the side channel 10, the first free end 22aa of the first shank 22a is arranged to engage with the first corner 15a, which is the corner between one of the shelf parts 11 and the first sidewall 12a and the second free end 22bb of the second shank 22b is arranged to engage with the second corner 15b, which is the corner between the other of the shelf parts 11 and the second sidewall 12b.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. A load carrying bar (1) for a roof rack, which load carrying bar (1) has an extension in a longitudinal direction (X), a height in a height direction (Y) transverse the longitudinal direction (X) and a width in a width direction (Z) transverse the longitudinal and height directions (X, Y), the load carrying bar (1) comprising:
- a channel (10) with an extension in the longitudinal direction (X), which channel (10) comprises a bottom part (11), two opposite sidewalls (12a, 12b), a first flange (13a) which protrudes from the first sidewall (12a), distal from the bottom part (11) and in direction towards the second sidewall (12b), and a second flange (13b) which protrudes from the second sidewall (12b), distal from the bottom part (11) and in direction towards the first sidewall (12a), and an opening (14) between the first and second flanges (13a, 13b), wherein the channel (10) has a first width (w₁) between the first and second sidewalls (12a, 12b) in the width direction (Z) and the opening (14) has a second width (w₂) between the first and second flanges (13a, 13b) in the width direction (Z), which second width (w₂) of the opening (11) is smaller than the first width (w₁) of the channel (10), wherein the channel (10) is arranged to receive a fastening member of an accessory for the load carrying bar (1),
- a seal (20), which is arranged into the channel (10) and has an extension in the longitudinal direction (X), wherein the seal (20) comprises a sealing part (21) arranged to seal the opening (14) of the channel (10) and one spring part (22) arranged to spring the sealing part (21) towards the opening (14), wherein the spring part (22) is arranged in contact with the bottom part (11) of the channel (10), **characterized in that** the spring part (22) is attached to the sealing part (21) by at least one stem part (23) extending between the sealing part (21) and the spring part (22) in the height direction (Y), such that at least two cavities (25a, 25b) are arranged between the sealing part (21) and the spring part (22) on opposite sides of the stem part (23), wherein the stem part is attached to a central part of the sealing part (21) and to a central part of the spring part (22), seen in the width direction (Z).

2. Load carrying bar (1) according to claim 1, wherein the seal (20) is elastic.

3. Load carrying bar (1) according to claim 1 or 2, wherein the seal (20) has a density within the range 400 - 900 kg/m³.

4. Load carrying bar (1) according to any of the preceding claims, wherein the spring part (22) of the seal (20) is arranged in contact with first and second corners (15a, 15b) of the channel (10), wherein the first corner (15a) is arranged between the first sidewall (12a) and the bottom part (11) of the channel (10) and the second corner (15b) is arranged between the second sidewall (12b) and the bottom part (11) of the channel (10).

5. Load carrying bar (1) according to any of the preceding claims, wherein the sealing part (21) of the seal (20) comprises a first engagement part (21a) arranged to engage with the first flange (13a) and a second engagement part (21b) arranged to engage with the second flange (13b), wherein the first and second engagement parts (21a, 21b) are arranged to prevent the seal (20) from leaving the channel (10) when the spring part (22) springs the sealing part (21) towards the opening (14).

6. Load carrying bar (1) according to any of the preceding claims, wherein the spring part (22) comprises a first shank (22a) and an opposite second shank (22b) which each is attached to the stem part (23), wherein the first shank (22a) is arranged to engage at least with the bottom part (11) of the channel (10) with a first free end (22aa) and the second shank (22b) is arranged to engage at least with the bottom part (11) of the channel (10) with a second free end (22bb).

7. Load carrying bar (1) according to claim 6, wherein the first free end (22aa) of the first shank (22a) is arranged to engage with the first corner (15a) of the channel (10) and the second free end (22bb) of the second shank (22b) is arranged to engage with the second corner (15b) of the channel (10).

8. Load carrying bar (1) according to any of the preceding claims, wherein the spring part (22) has a cross-section which is C-shaped.

9. Load carrying bar (1) according to any of claims 1 - 7, wherein the spring part (22) has a cross-section which is V-shaped.

10. Load carrying bar (1) according to any of the preceding claims, wherein the seal (20) further comprises a second and third stem parts extending between the sealing part (21) and the spring part (22) in the height direction (Y), on opposite sides of the first stem part (23), wherein one of the at least two cavities (25a, 25b) is arranged between the first stem part (23) and the second stem part and the other of the at least two cavities (25a, 25b) is arranged between the first stem part (23) and the third stem part.

## Patentansprüche

1. Lasttragreling (1) für einen Dachgepäckträger, wobei die Lasttragreling (1) eine Erstreckung in einer Längsrichtung (X), eine Höhe in einer quer zu der Längsrichtung (X) verlaufenden Höhenrichtung (Y) und eine Breite in einer quer zu der Längs- und der Höhenrichtung (X, Y) verlaufenden Breitenrichtung (Z) aufweist, wobei die Lasttragreling (1) Folgendes umfasst:
- einen Kanal (10) mit einer Erstreckung in der Längsrichtung (X), wobei der Kanal (10) einen unteren Teil (11), zwei gegenüberliegende Seitenwände (12a, 12b), einen ersten Flansch (13a), der von der ersten Seitenwand (12a) distal von dem unteren Teil (11) und in Richtung zu der zweiten Seitenwand (12b) vorsteht, und einen zweiten Flansch (13b), der von der zweiten Seitenwand (12b) distal von dem unteren Teil (11) und in Richtung zu der ersten Seitenwand (12a) vorsteht, sowie eine Öffnung (14) zwischen dem ersten und dem zweiten Flansch (13a, 13b) umfasst, wobei der Kanal (10) eine erste Breite (w₁) zwischen der ersten und der zweiten Seitenwand (12a, 12b) in der Breitenrichtung (Z) aufweist und die Öffnung (14) eine zweite Breite (w₂) zwischen dem ersten und dem zweiten Flansch (13a, 13b) in der Breitenrichtung (Z) aufweist, wobei die zweite Breite (w₂) der Öffnung (11) kleiner als die erste Breite (w₁) des Kanals (10) ist, wobei der Kanal (10) zur Aufnahme eines Befestigungsglieds eines Zubehörteils für die Lasttragreling (1) angeordnet ist,
- eine Dichtung (20), die in dem Kanal (10) angeordnet ist und eine Erstreckung in der Längsrichtung (X) aufweist, wobei die Dichtung (20) einen zum Abdichten der Öffnung (14) des Kanals (10) angeordneten Dichtungsteil (21) und einen zum Federn des Dichtungsteils (21) zu der Öffnung (14) hin angeordneten Federteil (22) umfasst, wobei der Federteil (22) in Kontakt mit dem unteren Teil (11) des Kanals (10) angeordnet ist, **dadurch gekennzeichnet, dass** der Federteil (22) durch mindestens einen sich zwischen dem Dichtungsteil (21) und dem Federteil (22) in der Höhenrichtung (Y) erstreckenden Stielteil (23) an dem Dichtungsteil (21) angebracht ist, so dass mindestens zwei Hohlräume (25a, 25b) zwischen dem Dichtungsteil (21) und dem Federteil (22) an gegenüberliegenden Seiten des Stielteils (23) angeordnet sind, wobei der Stielteil, in der Breitenrichtung (Z) gesehen, an einem mittleren Teil des Dichtungsteils (21) und an einem mittleren Teil des Federteils (22) angebracht ist.

2. Lasttragreling (1) nach Anspruch 1, wobei die Dichtung (20) elastisch ist.

3. Lasttragreling (1) nach Anspruch 1 oder 2, wobei die Dichtung (20) eine Dichte im Bereich von 400 - 900 kg/m³ aufweist.

4. Lasttragreling (1) nach einem der vorhergehenden Ansprüche, wobei der Federteil (22) der Dichtung (20) in Kontakt mit einer ersten und einer zweiten Ecke (15a, 15b) des Kanals (10) angeordnet ist, wobei die erste Ecke (15a) zwischen der ersten Seitenwand (12a) und dem unteren Teil (11) des Kanals (10) angeordnet ist und die zweite Ecke (15b) zwischen der zweiten Seitenwand (12b) und dem unteren Teil (11) des Kanals (10) angeordnet ist.

5. Lasttragreling (1) nach einem der vorhergehenden Ansprüche, wobei der Dichtungsteil (21) der Dichtung (20) einen zum Eingriff mit dem ersten Flansch (13a) angeordneten ersten Eingriffsteil (21a) und einen zum Eingriff mit dem zweiten Flansch (13b) angeordneten zweiten Eingriffsteil (21b) umfasst, wobei der erste und der zweite Eingriffsteil (21a, 21b) so angeordnet sind, dass sie verhindern, dass die Dichtung (20) den Kanal (10) verlässt, wenn der Federteil (22) den Dichtungsteil (21) zu der Öffnung (14) hin federt.

6. Lasttragreling (1) nach einem der vorhergehenden Ansprüche, wobei der Federteil (22) einen ersten Schaft (22a) und einen gegenüberliegenden zweiten Schaft (22b) umfasst, die jeweils an dem Stielteil (23) angebracht sind, wobei der erste Schaft (22a) dazu angeordnet ist, mit einem ersten freien Ende (22aa) mindestens mit dem unteren Teil (11) des Kanals (10) in Eingriff zu kommen, und der zweite Schaft (22b) dazu angeordnet ist, mit einem zweiten freien Ende (22bb) mindestens mit dem unteren Teil (11) des Kanals (10) in Eingriff zu kommen.

7. Lasttragreling (1) nach Anspruch 6, wobei das erste freie Ende (22aa) des ersten Schafts (22a) so angeordnet ist, dass es mit der ersten Ecke (15a) des Kanals (10) in Eingriff kommt, und das zweite freie Ende (22bb) des zweiten Schafts (22b) so angeordnet ist, dass es mit der zweiten Ecke (15b) des Kanals (10) in Eingriff kommt.

8. Lasttragreling (1) nach einem der vorhergehenden Ansprüche, wobei der Federteil (22) einen C-förmigen Querschnitt aufweist.

9. Lasttragreling (1) nach einem der Ansprüche 1 - 7, wobei der Federteil (22) einen V-förmigen Querschnitt aufweist.

10. Lasttragreling (1) nach einem der vorhergehenden Ansprüche, wobei die Dichtung (20) ferner einen zweiten und einen dritten Stielteil umfasst, die sich zwischen dem Dichtungsteil (21) und dem Federteil (22) in der Höhenrichtung (Y) an gegenüberliegenden Seiten des ersten Stielteils (23) erstrecken, wobei einer der mindestens zwei Hohlräume (25a, 25b) zwischen dem ersten Stielteil (23) und dem zweiten Stielteil angeordnet ist und der andere der mindestens zwei Hohlräume (25a, 25b) zwischen dem ersten Stielteil (23) und dem dritten Stielteil angeordnet ist.

## Revendications

1. Barre de support de charge (1) pour galerie de toit, laquelle barre de support de charge (1) présente une extension dans la direction de la longueur (X), une hauteur dans la direction de la hauteur (Y) transversale à la direction de la longueur (X) et une largeur dans la direction de la largeur (Z) transversale à la direction de la longueur et à la direction de la hauteur (X, Y), la barre de support de charge (1) comprenant :
- un canal (10) doté d'une extension dans la direction de la longueur (X), lequel canal (10) comprend une partie inférieure (11), deux parois latérales (12a, 12b) opposées, une première bride (13a) qui fait saillie de la première paroi latérale (12a), distale de la partie inférieure (11) et en direction de la seconde paroi latérale (12b), et une seconde bride (13b) qui fait saillie de la seconde paroi latérale (12b), distale de la partie inférieure (11) et en direction de la première paroi latérale (12a), et une ouverture (14) entre les première et seconde brides (13a, 13b), le canal (10) présentant une première largeur (w₁) entre les première et seconde parois latérales (12a, 12b) dans la direction de la largeur (Z) et l'ouverture (14) présentant une seconde largeur (w₂) entre les première et seconde brides (13a, 13b) dans la direction de la largeur (Z), laquelle seconde largeur (w₂) de l'ouverture (11) étant inférieure à la première largeur (w₁) du canal (10), le canal (10) étant conçu pour recevoir un élément de fixation d'un accessoire pour la barre de support de charge (1),
- un joint d'étanchéité (20), qui est disposé dans la canal (10) et présente une extension dans la direction de la longueur (X), le joint d'étanchéité (20) comprenant une partie d'étanchéité (21) conçue pour rendre étanche l'ouverture (14) du canal (10) et une partie ressort (22) conçue pour faire jaillir la partie d'étanchéité (21) vers l'ouverture (14), la partie ressort (22) étant disposée en contact avec la partie inférieure (11) du canal (10), **caractérisé en ce que** la partie ressort (22) est fixée à la partie d'étanchéité (21) par au moins une partie tige (23) s'étendant entre la partie d'étanchéité (21) et la partie ressort (22) dans la direction de la hauteur (Y), de sorte qu'au moins deux cavités (25a, 25b) soient disposées entre la partie d'étanchéité (21) et la partie ressort (22) sur des côtés opposés de la partie tige (23), la partie tige étant fixée à une partie centrale de la partie d'étanchéité (21) et à une partie centrale de la partie ressort (22), vue dans la direction de la largeur (Z).

2. Barre de support de charge (1) selon la revendication 1, le joint d'étanchéité (20) étant élastique.

3. Barre de support de charge (1) selon la revendication 1 ou 2, le joint d'étanchéité (20) ayant une densité dans la plage comprise entre 400 et 900 kg/m³.

4. Barre de support de charge (1) selon l'une quelconque des revendications précédentes, la partie ressort (22) du joint d'étanchéité (20) étant disposée en contact avec des premier et second coins (15a, 15b) du canal (10), le premier coin (15a) étant disposé entre la première paroi latérale (12a) et la partie inférieure (11) du canal (10) et le second coin (15b) étant disposé entre la seconde paroi latérale (12b) et la partie inférieure (11) du canal (10).

5. Barre de support de charge (1) selon l'une quelconque des revendications précédentes, la partie d'étanchéité (21) du joint d'étanchéité (20) comprenant une première partie de mise en prise (21a) conçue pour venir en prise avec la première bride (13a) et une seconde partie de mise en prise (21b) conçue pour venir en prise avec la seconde bride (13b), les première et seconde parties de mise en prise (21a, 21b) étant conçues pour empêcher le joint d'étanchéité (20) de quitter le canal (10) lorsque la partie ressort (22) fait jaillir la partie d'étanchéité (21) vers l'ouverture (14).

6. Barre de support de charge (1) selon l'une quelconque des revendications précédentes, la partie ressort (22) comprenant un premier corps (22a) et un second corps (22b) opposé qui sont chacun fixés à la partie tige (23), le premier corps (22a) étant conçu pour venir en prise au moins avec la partie inférieure (11) du canal (10) avec une première extrémité libre (22aa) et le second corps (22b) étant conçu pour venir en prise au moins avec la partie inférieure (11) du canal (10) avec une seconde extrémité libre (22bb).

7. Barre de support de charge (1) selon la revendication 6, la première extrémité libre (22aa) du premier corps (22a) étant conçue pour venir en prise avec le premier coin (15a) du canal (10) et la seconde extrémité libre (22bb) du second corps (22b) étant conçue pour venir en prise avec le second coin (15b) du canal (10) .

8. Barre de support de charge (1) selon l'une quelconque des revendications précédentes, la partie ressort (22) présentant une section transversale en forme de C.

9. Barre de support de charge (1) selon l'une quelconque des revendications 1 à 7, la partie ressort (22) présentant une section transversale en forme de V.

10. Barre de support de charge (1) selon l'une quelconque des revendications précédentes, le joint d'étanchéité (20) comprenant en outre une deuxième et une troisième partie tige s'étendant entre la partie d'étanchéité (21) et la partie ressort (22) dans la direction de la hauteur (Y), sur des côtés opposés de la première partie tige (23), l'une des au moins deux cavités (25a, 25b) étant disposée entre la première partie tige (23) et la deuxième partie tige et l'autre des au moins deux cavités (25a, 25b) étant disposée entre la première partie tige (23) et la troisième partie tige.
